Europäisches Patentamt

European Patent Office

Office européen des brevets

(19)

(11) Publication number: **0 345 313 B1**

# EUROPEAN PATENT SPECIFICATION

(45) Date of publication of patent specification: **25.08.93** (51) Int. Cl.⁵: **G01N 29/02**

(21) Application number: **88909850.5**

(22) Date of filing: **01.11.88**

(86) International application number:
**PCT/SE88/00587**

(87) International publication number:
**WO 89/04482 (18.05.89 89/11)**

(54) **ACOUSTIC METHOD FOR MEASURING PROPERTIES OF A MOBILE MEDIUM.**

(30) Priority: **02.11.87 SE 8704255**

(43) Date of publication of application:
**13.12.89 Bulletin  89/50**

(45) Publication of the grant of the patent:
**25.08.93 Bulletin  93/34**

(84) Designated Contracting States:
**AT BE CH DE FR GB IT LI LU NL SE**

(56) References cited:
**EP-A- 0 214 769      WO-A-87/04793
DE-A- 2 126 301      US-A- 3 040 562
US-A- 3 435 664      US-A- 4 112 740**

(73) Proprietor: **DYMLING, Stephan**
**Rudbecksgatan 113**
**S-216 22 Malmö(SE)**

Proprietor: **HERTZ, Tomas**
**Filippavägen 2 D**
**S-222 41 Lund(SE)**

Proprietor: **LINDSTRÖM, Kjell**

**N. Skogsvägen 3**
**S-236 00 Höllviken(SE)**

Proprietor: **PERSSON, Hans W.**
**Thulehemsvägen 117**
**S-223 67 Lund(SE)**

(72) Inventor: **DYMLING, Stephan**
**Rudbecksgatan 113**
**S-216 22 Malmö(SE)**
Inventor: **HERTZ, Tomas**
**Filippavägen 2 D**
**S-222 41 Lund(SE)**
Inventor: **LINDSTRÖM, Kjell**
**N. Skogsvägen 3**
**S-236 00 Höllviken(SE)**
Inventor: **PERSSON, Hans W.**
**Thulehemsvägen 117**
**S-223 67 Lund(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

74 Representative: **Müller, Hans-Jürgen, Dipl.-Ing. et al**

**Müller, Schupfner & Gauger Maximilianstrasse 6 Postfach 10 11 61 D-80085 München (DE)**

## Description

The present invention relates to a method for determining properties such as viscosity, thixotropy, lubricity, flowability of a medium comprising a carrier liquid and substances suspended or emulsified in said carrier liquid according to the opening part of claim 1 and to the use of such method for particular purposes.

A method of such kind is described in DE-A 2 126 301. The object of this known method is to form cavities in the liquid in order to determine the existence or non-existence of impurities in the liquid. Such cavities are formed by a kind of implosion. For this reason acoustic energy of a frequency of between 65 and 90 kHz is introduced into the liquid.

Another method of this type is described in WO-A1-87/04 793. This method allows the measurement of the pulse amplitude of the sound wave and the duration of the ultrasonic oscillations after passing through the liquid.

Furthermore, it is described in EP-A2-0 214 769 to determine the magnitude and polarity of the electric charge of aerosol particles by the application of a dual beam Laser Doppler velocimeter. The Doppler velocimeter measures the phase lag of the particle motion with respect to the acoustic field.

It is an object of the present invention to facilitate the measurement of properties of the medium. The exact measurement and/or characterization of physical parameters of the medium has become very evident for many years. The measurement of such properties allows also the qualification of the materials from which the medium has been produced. This is important e.g. in connection with biotechnical processes e.g. fermentation and in the foodstuff and processing industry at all. Also the medicinal industry is concerned.

The invention is characterized in claim 1 and preferred embodiments are claimed in subclaims.

According to the invention a uni-directional flow movement is generated in the medium by the acoustic energy. The acoustic waves introduced into the medium are made to reflect within the medium and the frequency spectrum of the reflected acoustic waves is compared with the frequency spectrum of the acoustic waves introduced into the medium, for determining the velocity of the carrier liquid and of the substances forming the medium. The medium is usually stillstanding.

The method according to the invention is preferably used for determining changes in viscosity and occurence of gas bubbles and/or solid particles in a medium enclosed in a package by introducing acoustic energy from the outside of the package via a portion of the package wall comprising a homogenous material, and by sensing the sound waves reflected through a portion of the package wall which likewise comprises a homogenous wall section. Therefore the invention is preferably used for testing the filling goods in non-returnable packages e.g. milk packages avoiding to open the packages. Also blood can be tested in the same way. Such blood tested can then be stored in e.g. plastic bags in cold storage until the time when it is needed.

Preferred embodiments of the invention are described below and in connection with the drawings.

Figures 1 and 2 are schematical block diagrams of the inventional method.

Figures 3a - 3d are graphs showing the frequency spectrum of measurements of fresh milk, and warm glycerol.

Figures 4, 5 and 6 are schematical block diagrams of other embodiments of the invention.

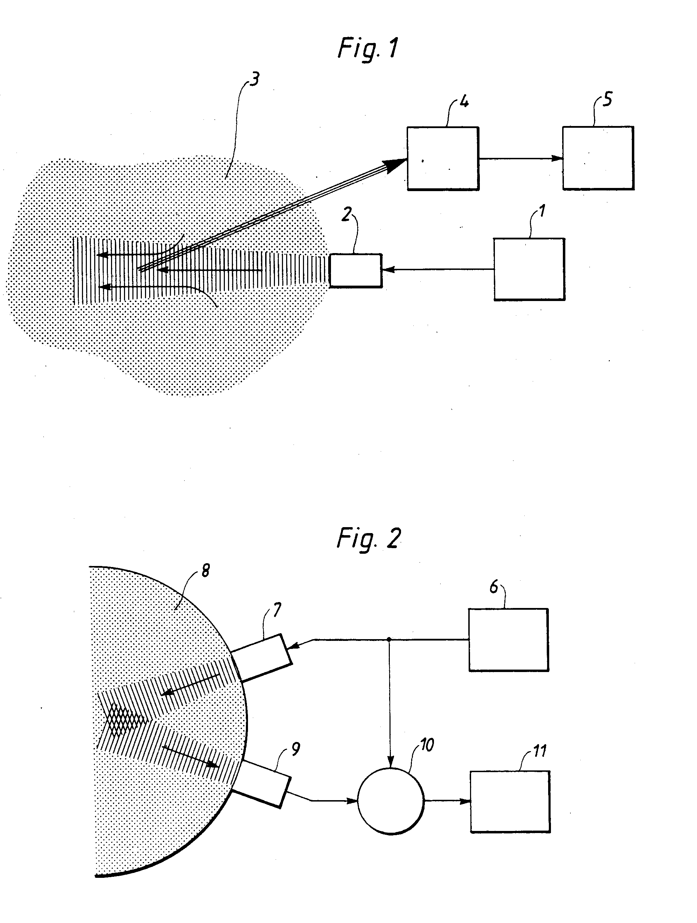

According to fig. 1 the signal generator 1 drives an ultrasound transmitter 2 which consequently generates acoustic energy which is transmitted into a mobile medium 3. The acoustic energy generates a movement in the stillstanding medium, see also below. By studying this movement by means of some known measuring method 4 reproducible information is obtained which after a certain signal processing 5 may be used for an assessment of the physical properties of the medium 3.

The acoustic signal may be generated with the help of an ultrasonics transmitter 2, e.g. of the piezoelectric type. It has been known for a long time that the propagation of ultrasonic waves through a viscous medium is associated with a unidirectional movement in the medium, the so-called "acoustic flow". Historically seen the effect was studied already at the end of the nineteenth century (1884) by the father of acoustics, Lord Rayleigh. In principle the acoustic flow can be divided into two main types. The first type relates to the passage of a plain acoustic wave through an attenuating medium. The acoustic flow then arising is usually known, for historical reasons, as "quartz wind". The second type of acoustic flow is either associated with inhomogeneities in a sound field or the joint action between a sound field and changes in impedance at boundary faces. For a more detailed description of the phenomenon reference is made to "Methods of experimental physics", Vol.19, Ultrasonics, Editor: Peter D. Edmonds, Academic Press, 1981.

Other parameters which affect the magnitude of the movement are the viscosity of the medium, the frequency and intensity and shape of the acoustic signal transmitted and the distance to surrounding stationary waves. If bodies are present in the medium which reflect the acoustic signal, these will be affected by a radiation pressure proportional to the intensity of the acoustic signal.The term "body" hereinafter refers to a region with an acoustic impedance different from that of the environment, for example particles in a liquid or liquid drops in a gas. The bodies in the medium will be acted upon by a force, whose magnitude depends on the intensity of the acoustic signal, the size etc.of the bodies , by which they will be put in motion relatively to the surrounding medium. The magnitude of this movement depends on the magnitude of the force, the physical properties of the surrounding medium etc. The movement of the bodies in relation to the ultrasonics transmitter thus will depend on the movement of the surrounding medium as well as on the the bodies' own movement in relation to the surrounding medium.

A series of different ways exist for measuring the movement in the medium. In the following are given a few examples of practical measurement situations with a description of how properties of the actual medium can be measured according to the above principle.

A medium is enclosed in a sealed container and the task of the measurement consists in determining the movement of the medium without having to open the container. Such a task may be considered to occur in connection with the aforementioned problem which may be that of checking whether milk packaged sterile is fresh, or whether blood in the blood bags has commenced to deteriorate. In both these cases bodies are present in the medium, fat emulsion and blood corpuscles respectively, which means that Doppler technique can be applied for the detection of movement of the bodies in relation to a receiver. A measuring situation in accordance with Figure 2, where a so-called continuous ultrasound Doppler technique is used, can be applied in this case. A signal generator (6) with a suitably chosen output and frequency drives an ultrasound transmitter (7) to generate acoustic energy which is transmitted into the medium (8) straight through the package wall. This is an acceptable solution in practice, since most normal packing material does not constitute any major obstacle for a acoustic wave. A part of the acoustic energy transmitted will be reflected by the bodies in the medium and its frequency shifted in accordance with the so-called Doppler effect.

The magnitude of the frequency shift, $\Delta f$, is given by

$$\Delta f = k\, v\, f\, /c$$

where

   $\Delta f$ =    Doppler shift

   $k$ =    constant, depending on the actual measuring situation

   $v$ =    velocity of the bodies

   $f$ =    frequency of the acoustic signal transmitted

   $c$ =    velocity of sound in the medium

It follows from the above that the magnitude of the frequency shift is directly proportional to the velocity of the bodies. The reflected signal is detected with the help of a further ultrasound transmitter (9), whereafter the frequency-shifted part of the signal received, the so-called Dopper shift, is separated, e.g. by multiplying the signal received by the signal from the signal generator (6) in a mixer (10). The magnitude of the Doppler shift can be measured thereafter in any type of frequency analyzer (11).

In this case it is possible therefore to use the same acoustic energy both for generating movement in the medium and for measuring the resulting flow. Since the bodies have been put in motion by the acoustic signal transmitted and their velocity is a function of factors named above, inter alia the intensity of the signal and the viscosity of the medium, velocities of the bodies and therefore the frequency content of the Doppler shift will constitute an indicator of the viscous properties of the medium, provided other parameters, such as the intensity, are known. It is interesting to note that the effect we propose here for measuring properties of the medium has been observed previously but had been considered to be a difficult artifact, which greatly limited the signal to noise ratio of the ultrasound Doppler method.

The intensity of the Doppler-shifted signal is a direct measure of how great a part of the signal introduc ed has been reflected by the mobile bodies in the medium. The reflected intensity depends among other things on the number of the bodies and their acoustic cross-sectional plane. If the acoustic cross-sectional plane of the bodies is known, e.g. from a reference solution, the intensity of the Doppler signal constitutes a measure of the quantity of mobile bodies in the medium. In order to increase the reproducibility of the measurements, the Doppler-shifted signal may be standardized through division by the non-frequency-shifted, reflected acoustic signal.

The reflecting bodies can be accelerated to different velocities in the medium e.g. as a function of the appearance of the flow profile in the so-called "sensitive volume" or on the grounds of the different bodies having varying size or acoustic impedance. As a result the Doppler effect will contain a number of different frequency components with diverse amplitudes, where the respective amplitude, inter alia, depends on the product of quantity times acoustic cross-sectional plane. It will be of great interest therefore to know more closely which frequencies enter into the Doppler signal as well as their relative intensities. This can be done quite easily by the frequency analyzer (11). Correspondingly there can be special advantages in the use in certain measuring situations of other known types of Doppler measuring equipment e.g. so-called direction-sensing Doppler or so-called pulsed Doppler. which both bring about an improved spatial resolution of the measurements and detection of other flow directions, turbulence, etc. The pulsed Dopper, moreover, can perform measurements at varying distance from the ultrasound transmitter. By the combination of several such measurements, independent parameters of the mobile medium can be determined.

The frequency content of the Doppler signal provides information on the velocities of the bodies in the medium in relation to transmitter and receiver, which is a well-known property of the ultrasound Doppler equipment used at present, inter alia, in infirmaries for so-called non-invasive blood flow measurements. The analogy is not quite perfect,however, since in the normal medical usage of ultrasound Doppler blood flow velocities in the order of magnitude of 5 - 100 cm/s are measured, which are appreciably higher than the velocities which the bodies in the aforementioned measuring situation can be expected to attain. As a matter of fact, commercially available ultrasound Doppler apparatuses cannot be used for the type of measurements which are claimed for the above-said invention, since these apparatuses contain high-pass filters which for various reasons filter out all low-frequency Doppler signals corresponding to velocities below approx. 5 cm/s.

In a dissertation from the Lunds Tekniska och Naturvetenskapliga Högskola (Technical and Scientific University of Lund), "Measurement of blood perfusion in tissue using Doppler ultrasound" LUTEDX/(TEEM-1027)/1-4/(1985), Stephan Dymling recently has shown that it is possible to design highly stable Doppler measuring equipment with performance which also manage to measure the extremely small Doppler shifts which a measuring equipment according to the above-said invention is expected to produce.

For further clarification of the method of measurement, a practical embodiment for the measurement of changes in milk is given in the following. As a signal generator (6) a highly stable oscillator is required which is obtained simplest by using a crystal oscillator or a crystal-controlled synthesis generator with a frequency stability of better than $10^{-7}$. The signal used is selected as a function of the actual measuring medium: For milk a frequency of 10 MHz and an amplitude of 1-10 V are suitable starting values. This signal drives an ultrasound transmitter whose transmitter element may consist of a piezoeletric material such as e.g. Ferroperm type PZ.

The acoustic energy so generated in fresh milk will have an acoustic intensity of the order of magnitude of 100 mW/cm$^2$, which results in an acoustic flow of aprox. 1 cm/s. The reflected ultrasound signal,which is detected with the help of the ultrasound transmitter (9),is therefore Doppler-shifted. With the help of a mixer (10) the Doppler shift which in this case ought to be of the order of magnitude 100 Hz is detected. The Doppler signal detected is analyzed with the help of a Hewlett Packard Spectrumanalyzer model 3582A (11) and the measuring result is substantiated through digital data storage or through printout on a plotter.

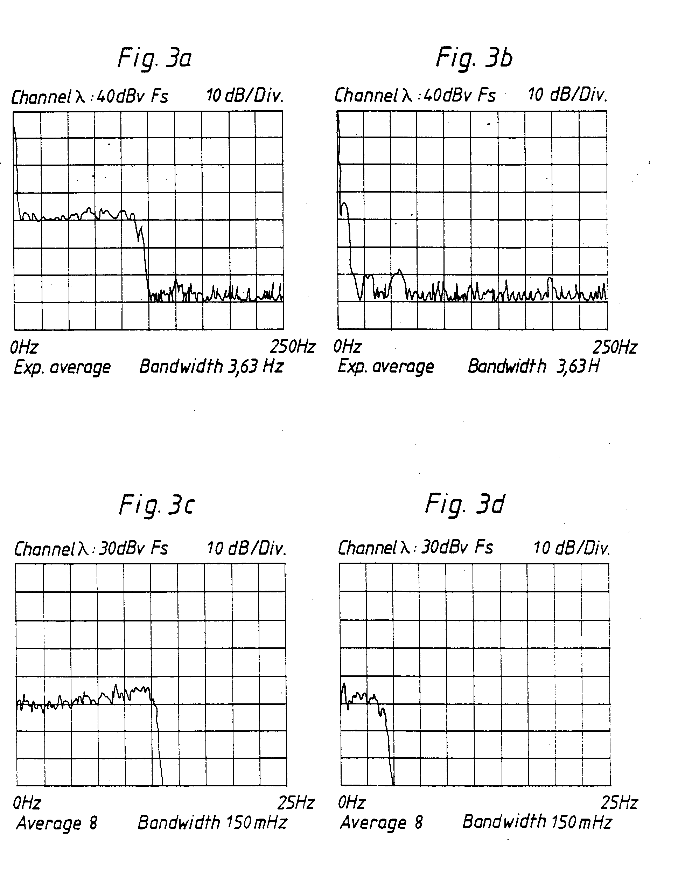

With this equipment practical measurements can be carried out and some measuring results are represented in Figure 3. Figure 3A shows a frequency spectrum from a measurement of fresh milk whereas Figure 3B shows how the spectra have been changed after the milk had been stored for 2 days at room temperature. It can be seen clearly that in the deteriorated milk the particles move at lower velocity. Figure 3C shows a frequency spectrum of the Doppler signal on measuring warm (35°C) glycerol with addition of reflecting bodies, and Figure 3D shows corresponding spectra after the temperature has been lowered to 20°C. The reduced Doppler shift agrees well with previously known facts suggesting that the viscosity of glycerol is a function of the temperature.

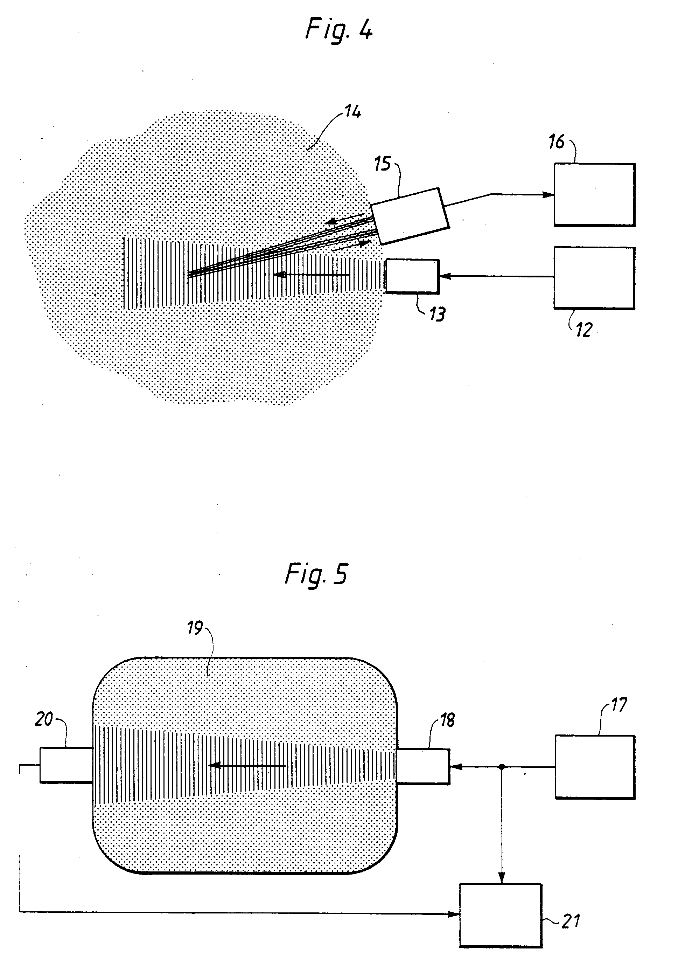

Instead of the acoustic Doppler technique,it is also feasible,ifthe bodies have an optical impedance which differs from that of the surrounding medium, to use optical Doppler technique for measuring the resulting acoustic flow. The measuring set-up in this case will be modified in accordance with Figure 4. A signal generator (12) with suitably chosen output and frequency drives an ultrasound transmitter (13) to generate acoustic energy in the medium (14) (corresponding to 6,7 and 8 in Figure 2). The measuring method is now an optical so-called laser Doppler (15), whereafter the measuring signal obtained is signal-processed in (16) according to the above-said. The advantages of the laser Doppler as against the ultrasound Doppler rests above all in the possibility of obtaining very good spatial resolution, that is to say permitting measurement of the movement in a single point. The disadvantage is that the method functions only in more or less transparent media.

In certain media it is not possible to use Doppler technique as a measuring method for the detection of the acoustic flow.e.g. when the medium does not contain any reflecting bodies. However in such cases too an acoustic flow may be developed e.g. through the aforementioned "quartz wind". The movement now has to be detected in a different manner.

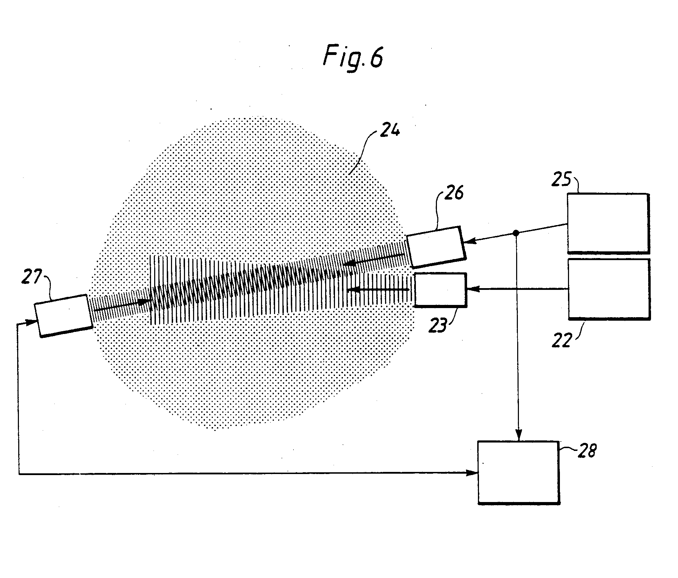

Figure 5 shows a possible measuring set-up. The acoustic energy in the medium (19) is produced in the customary manner with the help of a signal generator (17) and an ultrasound transmitter (18). Instead of measuring the reflected energy it is now the transmitted sound signal which is detected with the help of a further ultrasound transmitter (20). The actual measurement of the acoustic flow can be done in a number of different ways. e.g a) through phase comparison in (21) of the transmitted and the detected acoustic signals, b)through the generated signal containing a repetitive transient disturbance whose transmission time up to (20) is measured in (21), or c) through generation by the signal generator of a randomized signal whose transmission time up to (20) is detected with the help of correlation technique in (21) A further method for carrying out the measurement is shown in Figure 6. The acoustic flow in the medium (24) is generated from the signal generator (22) via the ultrasound transmitter (23). The measurement now is done by determinations of the transmission time with the help of two other ultrasound transmitter, (26) and (27). The measuring signal may be e.g. ultrasonic energy of a different ultrasonic frequency or it may consist of any form of pulse sequence where phase or cycle time are measured in (28). Finally the measurement naturally also can be carried out by means of "sing-around"-technique.

Regardless of the measuring method it is possible before the start of the actual measurement, that is to say before the acoustic energy is supplied to the medium, to use the measuring method in order to investigate the presence of any disturbing movements in the medium. This may be applied as an autotest to assess how far it is possible to use the measuring method in the particular measuring set-up and regarding the expected signal-to-noise level for the coming measurement. With a suitable signal processing technique, measurements of physical properties may take place also on media in motion, e.g. in conveyor pipe lines.

By variation of the intensity of the acoustic signal transmitted other properties of the medium can be investigated, especially non-linear properties such as thixotropy etc.

By watching the acceleration of the acoustic flow when the acoustic energy is introduced, further information concerning the medium concerned can be obtained.

Beside the aforementioned examples from infirmary, foodstuffs and processing industry the invention can be applied in many other fields, e.g. for monitoring the condition of cooking oils in hamburger restaurants, cutting oils in machine tools and lubricating oils in cars.

Many modifications are possible within the scope of the invention.

## Claims

1. Method for determining properties such as viscosity, thixotropy, lubricity, flowability of a medium comprising a carrier liquid and substances suspended or emulsified in said carrier liquid, said substances having an acoustic impedance differing from the acoustic impedance of the carrier liquid, wherein acoustic energy in the form of acoustic waves propagates in the medium and wherein parameters of the acoustic waves within said medium are measured, **characterized in that**
   a) a unidirectional flow movement is generated in the medium by the acoustic energy,
   b) the acoustic waves introduced into said medium are made to reflect within said medium, and
   c) the frequency spectrum of the reflected acoustic waves is compared with the frequency spectrum of the acoustic waves introduced into the medium for determining the velocity of the carrier liquid and of the substances forming said medium.

2. Method in accordance with claim 1, **characterized in that** the acoustic energy is constituted of ultrasound of a frequency between 20 kHz and 100 MHz.

3. Method in accordance with claim 2, **characterized in that** the movement of the medium is detected by means of Doppler technique.

4. Method in accordance with claim 3, **characterized in that** the Doppler-shifted components are standardized through division by the whole of the reflected signal.

5. Method in accordance with claim 1, **characterized in that** the quantity of mobile reflecting substances or bodies is measured as a function of the intensity of the frequency spectrum.

6. Method in accordance with claim 1, **characterized in that** the intensity of the acoustic signal emitted is varied during the course of detection.

7. Use of the method as claimed in any of the preceding claims for determining changes in viscosity and occurence of gas bubbles and/or solid particles in a medium enclosed in a package by introducing acoustic energy from the outside of the package via a portion of the package wall comprising a homogeneous material, and by sensing the sound waves reflected through a portion of the package wall which likewise comprises a homogenous wall section.

8. Use of the method as claimed in any of the claims 1 - 6, in accordance with claim 7 by introducing the acoustic energy through a wall portion of non-returnable packages wherein paper material of the packages has been removed and replaced by a cover foil of homogeneous material, and by picking up the reflected acoustic waves through a wall portion where the paper material has been punched out and replaced by a cover foil of homogeneous material.

**Patentansprüche**

1. Verfahren zur Bestimmung von Eigenschaften wie der Viskosität, der Thixotropie, der Schmierfähigkeit und der Fließfähigkeit eines Mediums, das eine Trägerflüssigkeit und in der Trägerflüssigkeit suspendierte oder emulgierte Substanzen aufweist, wobei die Substanzen eine akustische Impedanz aufweisen, die sich von der akustischen Impedanz der Trägerflüssigkeit unterscheidet, und wobei sich akustische Energie in der Form von akustischen Wellen in dem Medium fortpflanzt und Parameter der akustischen Wellen innerhalb des Mediums gemessen werden,
    **dadurch gekennzeichnet, daß**
       a) in dem Medium durch die akustische Energie eine unidirektionale Flußbewegung erzeugt wird,
       b) man die in das Medium eingebrachten akustischen Wellen innerhalb des Mediums reflektieren läßt, und
       c) das Frequenzspektrum der reflektierten akustischen Wellen mit dem Frequenzspektrum der in das Medium eingebrachten akustischen Wellen verglichen wird, um die Geschwindigkeit der Trägerflüssigkeit und der das Medium bildenden Substanzen zu bestimmen.

2. Verfahren nach Anspruch 1,
    **dadurch gekennzeichnet, daß**
    die akustische Energie aus Ultraschall mit einer Frequenz zwischen 20 kHz und 100 MHz besteht.

3. Verfahren nach Anspruch 2,
    **dadurch gekennzeichnet, daß**
    die Bewegung des Mediums mit Hilfe der Doppler-Technik erfaßt wird.

4. Verfahren nach Anspruch 3,
    **dadurch gekennzeichnet, daß**
    die dopplerverschobenen Komponenten durch Division durch das gesamte reflektierte Signal normalisiert werden.

5. Verfahren nach Anspruch 1,
    **dadurch gekennzeichnet, daß**
    die Menge der beweglichen reflektierenden Substanzen oder Körper als Funktion der Intensität des Frequenzspektrums gemessen wird.

6. Verfahren nach Anspruch 1,
    **dadurch gekennzeichnet, daß**
    die Intensität des emittierten akustischen Signals im Verlauf der Erfassung variiert wird.

7. Verwendung des in einem der vorhergehenden Ansprüche beanspruchten Verfahrens zum Bestimmen von Veränderungen in der Viskosität und dem Auftreten von Gasblasen und/oder festen Teilchen in einem in einer Packung eingeschlossenen Medium durch das Einbringen akustischer Energie von der Außenseite der Packung über einen Abschnitt der Packungswand, der ein homogenes Material aufweist, sowie durch Erfassen der durch einen Abschnitt der Packungswand reflektierten Schallwellen, der ebenfalls einen homogenen Wandabschnitt aufweist.

8. Verwendung des in einem der Ansprüche 1 - 6 beanspruchten Verfahrens nach Anspruch 7, indem die akustische Energie durch einen Wandabschnitt von Einwegpackungen eingebracht wird, an dem Papiermaterial der Pakkungen entfernt und durch eine Abdeckfolie aus homogenem Material ersetzt worden ist, und indem die reflektierten akustischen Wellen durch einen Wandabschnitt aufgenommen werden, wo das Papiermaterial ausgestanzt und durch eine Abdeckfolie aus homogenem Material ersetzt worden ist.

**Revendications**

1. Procédé de mesure de propriétés telles que la viscosité, la thixotropie le pouvoir lubrifiant, la facilité d'écoulement d'un milieu comprenant un liquide porteur et des substances en suspension ou en émulsion dans ledit liquide porteur, lesdites substances ayant une impédance acoustique qui diffère de l'impédance acoustique du liquide porteur, dans lequel de l'énergie acoustique sous forme d'ondes acoustiques se propage dans le milieu et dans lequel des paramètres des ondes acoustiques sont mesurés dans ledit milieu, caractérisé en ce que :

a) un mouvement d'écoulement mono-directionnel est créé dans le milieu au moyen de l'énergie acoustique

b) les ondes acoustiques introduites dans ledit milieu se réfléchissent à l'intérieur dudit milieu, et

c) le spectre de fréquence des ondes acoustiques réfléchies est comparé au spectre de fréquence des ondes acoustiques introduites dans le milieu pour déterminer la vitesse du liquide porteur et des substances qui forment ledit milieu.

2. Procédé selon la revendication 1, caractérisé en ce que l'énergie acoustique est constituée par des ultrasons dont la fréquence est comprise entre 20 kHz et 100 MHz.

3. Procédé selon la revendication 2, caractérisé en ce que le mouvement dans le milieu est détecté au moyen de la technique Doppler.

4. Procédé selon la revendication 3, caractérisé en ce que les composantes décalées par effet Doppler sont normalisées grâce à une division par la totalité du signal réfléchi.

5. Procédé selon la revendication 1, caractérisé en ce que la quantité des substances ou des éléments mobiles réfléchissants est mesurée en fonction de l'intensité du spectre de fréquence.

6. Procédé selon la revendication 1, caractérisé en ce que l'intensité du signal acoustique émis est modifiée au cours de la détection.

7. Utilisation du procédé selon l'une quelconque des revendications précédentes pour déterminer des modifications de viscosité et l'apparition de bulles de gaz et/ou de particules solides dans un milieu placé à l'intérieur d'un emballage en introduisant de l'énergie acoustique depuis l'extérieur de l'emballage à travers une partie de la paroi de l'emballage constituée d'un matériau homogène, et en détectant les ondes sonores réfléchies à travers une partie de la paroi de l'emballage qui est de la même manière constituée par une partie de paroi homogène.

8. Utilisation du procédé selon l'une quelconque des revendications 1 à 6, et conformément à la revendication 7 en introduisant l'énergie acoustique par une partie de paroi d'emballage non réfléchissant dans laquelle le papier constituant la matière des emballages a été supprimé et remplacé par une feuille de recouvrement en matériau homogène, et en captant les ondes acoustiques réfléchies à travers une partie de paroi dans laquelle le papier du matériau a été découpé et remplacé par une feuille de recouvrement en matériau homogène.

Fig. 1

Fig. 2

## Fig. 3a

Channel λ : 40dBv Fs    10 dB/Div.

0Hz          250Hz
Exp. average    Bandwidth 3,63 Hz

## Fig. 3b

Channel λ : 40dBv Fs    10 dB/Div.

0Hz          250Hz
Exp. average    Bandwidth 3,63 H

## Fig. 3c

Channel λ : 30dBv Fs    10 dB/Div.

0Hz          25Hz
Average 8    Bandwidth 150 mHz

## Fig. 3d

Channel λ : 30dBv Fs    10 dB/Div.

0Hz          25Hz
Average 8    Bandwidth 150 mHz

*Fig. 4*

*Fig. 5*

## Fig.6